# EUROPEAN PATENT APPLICATION

(11) **EP 4 848 419 A1**
(43) Date of publication of application: **02.12.2026**
(21) Application number: 26180264.9
(22) Date of filing: 21.05.2026
(51) Int. Cl.: H01M 50/15, H01M 50/16, H01M 50/157, H01M 50/342

(54) **TOP COVER ASSEMBLY, BATTERY, AND POWER CONSUMPTION DEVICE**

(30) Priority: 27.05.2025 CN 202510688415
(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: SUN, Wei, SHENZHEN, 518110 (CN); WANG, Pengcheng, SHENZHEN, 518110 (CN); XIAO, Hepan, SHENZHEN, 518110 (CN); XU, Weidong, SHENZHEN, 518110 (CN); LI, Wenbo, SHENZHEN, 518110 (CN)
(74) Representative: DREISS Patentanwälte PartG mbB

(57) **Abstract**

The present disclosure provides a top cover assembly, a battery, and a power consumption device. The top cover assembly includes a lower plastic part and a support member. The lower plastic part includes a body and a central protrusion connected to the lower plastic part body. The lower plastic part body includes a first surface and a second surface. The central protrusion protrudes from the second surface. The central protrusion includes a bottom surface and a first side surface connected between the bottom surface and the second surface. The lower plastic part has a mounting recess and a plurality of first vents arranged at intervals. The mounting recess is located at the lower plastic part body and the central protrusion. Each of the plurality of first vents is located at both the first side surface and the bottom surface. At least one of the plurality of first vents is in communication with the mounting recess. The support member is located in the mounting recess and supported between the lower plastic part and the top cover. The mounting recess includes a first side wall. A first gas channel is formed between the first side wall and the support member, and is in communication with at least one of the plurality of first vents. A dimension of the first gas channel in a length direction of the lower plastic part gradually decreases from an opening of the mounting recess towards a bottom wall of the mounting recess. The technical solution of the present disclosure can solve a problem of difficult venting during thermal runaway of a battery cell.

## Description

### FIELD

The present disclosure relates to the field of energy storage technologies, and in particular, to a top cover assembly, a battery, and a power consumption device.

### BACKGROUND

With the development of clean energy, batteries with recyclable properties are growing in popularity. The battery includes an electrode assembly, a housing, and a top cover assembly. The electrode assembly is located in a receiving space defined by the housing and the top cover assembly. The top cover assembly includes a top cover, a lower plastic part, and an explosion-proof valve. The top cover and the lower plastic part are arranged in a stacked manner. When thermal runaway occurs in the battery, the lower plastic part is prone to melting, which causes the electrode to float upward, blocking a venting channel at the top cover. Consequently, gas inside the battery cell cannot be discharged effectively, leading to excessive pressure inside the battery cell and resulting in an explosion.

### SUMMARY

Embodiments of the present disclosure provide a top cover assembly, a battery, and a power consumption device, which can solve a problem of gas inside a battery cell impossibly being effectively discharged when thermal runaway occurs in the battery cell.

**In** a first aspect, the present disclosure provides a top cover assembly. The top cover assembly includes a lower plastic part and a support member. The top cover assembly includes: a top cover; a lower plastic part and a support member. The lower plastic part includes a body and a central protrusion. The lower plastic part body and the top cover are stacked with each other. The lower plastic part body has a first surface and a second surface opposite to the first surface in a thickness direction of the lower plastic part body. The central protrusion is connected to the lower plastic part body and protrudes from the second surface. The central protrusion has a bottom surface and a first side surface, the bottom surface and the second surface being spaced apart from each other in a thickness direction of the lower plastic part, the first side surface being connected between the second surface and the bottom surface, and the first side surface being one of two side surfaces of the central protrusion spaced apart from each other in a length direction of the lower plastic part. The lower plastic part has a mounting recess and a plurality of first vents. The mounting recess is located at the lower plastic part body and the central protrusion and has an opening located at the first surface. The plurality of first vents are arranged at intervals in a width direction of the lower plastic part. Each of the plurality of first vents is located at the first side surface and the bottom surface, and extends through the central protrusion in both the length direction and the thickness direction of the lower plastic part, and at least one of the plurality of first vents is in communication with the mounting recess. The support member is located in the mounting recess. In the thickness direction of the top cover assembly, a side of the support member abuts against a bottom wall of the mounting recess, and another side of the support member is configured to support the top cover. The mounting recess has a first side wall, the first side wall is one of two side walls of the mounting recess spaced apart from each other in the length direction of the lower plastic part. A first gas channel is formed between the first side wall and the support member, and is in communication with at least one of the plurality of first vents. A dimension of the first gas channel in the length direction of the lower plastic part gradually decreases from the opening of the mounting recess towards the bottom wall of the mounting recess.

It can be understood that when the thermal runaway occurs in the battery cell, the explosion-proof valve mounted on the top cover is liable to rupture. Flammable gas and electric sparks generated by the battery cell are released into air outside the battery through the explosion-proof valve, and then react under the action of oxygen in the air, causing the battery cell to catch fire. Since a temperature of the battery cell during the thermal runaway is relatively high, the lower plastic part is prone to melting at a high temperature, which makes it difficult for the lower plastic part to play a blocking role when the battery cell floats up under the action of an electrolyte and air pressure. In this way, a distance between the battery cell and the top cover becomes closer or even in contact, increasing an amount of flammable gas and electric sparks splashing out of the battery. A possibility of the flammable gas and electric sparks coming into contact with the oxygen in the air is further increased, escalating a risk of the battery cell ignition.

Thus, in the embodiments of the present disclosure, by providing an insulating and electrolyte-corrosion-resistant support member between the lower plastic part and the top cover, the top cover can be effectively supported, improving a case where the lower plastic part deforms at a high temperature in an early stage of the battery cell triggering the thermal runaway and loses its binding effect on the battery cell. In addition, even if the lower plastic part melts caused by the thermal runaway of the battery cell, the support member may still be supported between the top cover and the battery cell, preventing the battery cell from floating up to approach the top cover, thereby inhibiting a phenomenon of the electric sparks splashing out of the explosion-proof valve and reducing the risk of the battery cell catching fire.

Moreover, by forming the plurality of first vents at the side surface of the central protrusion, the number of venting channels on the lower plastic part can be increased, a venting rate of the gas inside the battery cell when the thermal runaway occurs in the battery cell can be improved, and thus safety performance of the top cover assembly can be improved.

In addition, the first gas channel is formed between the support member and the first side wall of the mounting recess, and the first gas channel is in communication with the at least one of the plurality of first vents. It is possible to allow the first gas channel to provide a path for gas entering the mounting recess through the first vent, avoiding a problem where the support member blocks the first vent of the central protrusion to cause poor venting performance and an increase in air pressure, and accordingly result in an explosion of the battery cell. The gas inside the battery cell can be effectively discharged, improving venting reliability of the gas.

In addition, by setting the dimension of the first gas channel in the length direction of the lower plastic part to gradually decrease from the opening of the mounting recess towards the bottom wall of the mounting recess, a spacing between the support member and the first side wall of the mounting recess may be designed to be narrower at the bottom and wider at the top. This narrower configuration of the spacing at the bottom may reduce shaking of the support member after being assembled into the lower plastic part. This wider configuration of the spacing at the top may ensure that there is also a channel for venting in a region where the support member is located, improving venting reliability of the lower plastic part.

In a possible embodiment, the support member includes a main body and a first fixing portion. The main body has a first connection surface being one of two surfaces of the main body spaced apart from each other in the width direction of the lower plastic part. The first connection surface includes one first sub-surface and two second sub-surfaces, the first sub-surface being connected between the two second sub-surfaces, and one of the two second sub-surfaces, the first sub-surface, and the other one of the two second sub-surfaces being arranged sequentially in the thickness direction of the lower plastic part; and the first fixing portion is connected to the first sub-surface, and two first avoidance grooves are defined by the first fixing portion and the two second sub-surfaces arranged at the same side as the first fixing portion. Each of the two first avoidance grooves is in communication with the first gas channel.

In a possible embodiment, the support member further includes a second fixing portion; and the main body further has a second connection surface arranged opposite to the first connection surface in the width direction of the lower plastic part. The second connection surface includes one third sub-surface and two fourth sub-surfaces. The third sub-surface is connected between the two fourth sub-surfaces, and one of the two fourth sub-surfaces, the third sub-surface, and the other one of the two fourth sub-surfaces are arranged sequentially in the thickness direction of the lower plastic part. The second fixing portion is connected to the third sub-surface, and second avoidance grooves are defined by the second fixing portion and the two fourth sub-surfaces that are located at the same side as the second fixing portion. Each of the two second avoidance grooves is in communication with the first gas channel.

In a possible embodiment, the main body further has a first transition surface and a second transition surface. Each of the first transition surface and the second transition surface is connected between the first connection surface and the second connection surface, and the first transition surface and the second transition surface are opposite to each other in the length direction of the lower plastic part. Any one of connections between the first fixing portion and the first transition surface, and between the first fixing portion and the second transition surface is a curved surface transition; and/or any one of connections between the second fixing portion and the first transition surface, and between the second fixing portion and the second transition surface is a curved surface transition.

In a possible embodiment, the central protrusion further has a second side surface connected between the second surface and the bottom surface and spaced apart from the first side surface in the length direction of the lower plastic part; the lower plastic part has a plurality of second vents arranged at intervals in the width direction of the lower plastic part, each of the plurality of second vents is located at the second side surface and the bottom surface, and extends through the central protrusion in both the length direction and the thickness direction of the lower plastic part, and at least one of the plurality of second vents being in communication with the mounting recess. The mounting recess further has a second side wall opposite to the first side wall in the length direction of the lower plastic part. A second gas channel is formed between the second side wall and the support member, and is in communication with at least one of the plurality of second vents. A dimension of the second gas channel in the length direction of the lower plastic part gradually decreases from the opening of the mounting recess towards the bottom wall of the mounting recess, and the second gas channel is in communication with each of the two first avoidance grooves and/or each of the two second avoidance grooves.

In a possible embodiment, the mounting recess further has a third side wall and a fourth side wall. Each of the third side wall and the fourth side wall is connected between the first side wall and the second side wall, and the third side wall and the fourth side wall are opposite to each other in the width direction of the lower plastic part. A third gas channel is formed between the third side wall and the support member, and is in communication with each of the first gas channel and the second gas channel; and/or a fourth gas channel is formed between the fourth side wall and the support member, and is in communication with each of the first gas channel and the second gas channel.

In a possible embodiment, the lower plastic part has a cavity located at the lower plastic part body and the central protrusion, and an opening of the cavity is located at the first surface. The lower plastic part further includes a partition connected to a bottom wall of the cavity, and to two opposite side walls of the cavity in the length direction of the lower plastic part. The partition is engaged with an inner wall of the cavity to divide the cavity to form the mounting recess in the cavity. An end of the partition away from the bottom wall of the cavity is provided with a snap at least partially located in one of the two first avoidance grooves that is adjacent to the top cover. The snap is configured to fix the support member.

In a possible embodiment, the top cover has an explosion-proof hole extending through the top cover in the thickness direction of the top cover and configured to be connected to an explosion-proof valve. In the thickness direction of the top cover assembly, a projection of the support member on the top cover partially covers the explosion-proof hole; or in the thickness direction of the top cover assembly, a projection of the support member on the top cover is spaced apart from the explosion-proof hole.

In a possible embodiment, the lower plastic part further has a plurality of third vents arranged at intervals in the width direction of the lower plastic part. Each of the plurality of third vents extends through the central protrusion in the thickness direction of the lower plastic part, and at least one of the plurality of third vents is in communication with the mounting recess.

In a possible embodiment, the lower plastic part further includes a first edge protrusion connected to the lower plastic part body and protruding from the second surface. The first edge protrusion is located at an end of the lower plastic part body in a length direction of the lower plastic part body; and the first edge protrusion has a plurality of fourth vents arranged at intervals in the width direction of the lower plastic part and facing towards the plurality of first vents in the length direction of the lower plastic part. Each of the plurality of fourth vents extends through the first edge protrusion in the length direction of the lower plastic part.

In a possible embodiment, the lower plastic part further includes a second edge protrusion connected to the lower plastic part body and protruding from the second surface. The second edge protrusion is located at the other end of the lower plastic part body in the length direction of the lower plastic part body; and the second edge protrusion has a plurality of fifth vents arranged at intervals in the width direction of the lower plastic part and facing towards the plurality of second vents in the length direction of the lower plastic part. Each of the plurality of fifth vents extends through the second edge protrusion in the length direction of the lower plastic part.

In a possible embodiment, the lower plastic part has a first hole group. In the length direction of the lower plastic part, the first hole group is located on a side of the central protrusion and disposed adjacent to the central protrusion. The first hole group includes a sixth vent and a plurality of seventh vents. Each of the sixth vent and the plurality of seventh vents extends through the lower plastic part in the thickness direction of the lower plastic part. In a direction outward from a center line of the sixth vent in the width direction of the lower plastic part, the plurality of seventh vents are arranged in a form of at least two first annular rings which are sequentially sleeved around the sixth vent at intervals, and seventh vents of the plurality of seventh vents located on one of the at least two first annular rings are arranged at intervals. In the thickness direction of the top cover assembly, a projection of the explosion-proof hole on the lower plastic part body at least partially covers a part of a projection of the central protrusion on the lower plastic part body and a part of a projection of the plurality of seventh vents on the lower plastic part body.

In a possible embodiment, a dimension of each of the at least two first annular rings in the width direction of the lower plastic part is greater than a dimension of each of the at least two first annular rings in the length direction of the lower plastic part, and the dimension of each of the at least two first annular rings in the length direction of the lower plastic part gradually increases and then gradually decreases from one side of the lower plastic part in the width direction of the lower plastic part towards the other side of the lower plastic part in the width direction of the lower plastic part.

In a possible embodiment, the lower plastic part further includes a protuberance connected to each of the lower plastic part body and the central protrusion and protruding from the second surface. Each of the sixth vent and the plurality of seventh vents is formed at the protuberance and extends through the protuberance in the thickness direction of the lower plastic part. The lower plastic part further has a gas release recess having an opening located at the first surface, the gas release recess is recessed from the first surface towards the protuberance and the central protrusion, and the gas release recess is further in communication with each of the mounting recess, the sixth vent, and the plurality of seventh vents. In the thickness direction of the top cover assembly, a projection of the gas release recess on the top cover covers the explosion-proof hole.

In a second aspect, the present disclosure further provides a battery. The battery includes an electrode assembly, a housing, and the top cover assembly as described above. The top cover assembly is connected to the housing. A receiving space is defined by the top cover assembly and the housing. The electrode assembly is located in the receiving space.

In a third aspect, the present disclosure further provides a power consumption device. The power consumption device includes the battery as described above.

### BRIEF DESCRIPTION OF THE DRAWINGS

FIG. 1 is a schematic structural view of an energy storage system provided by an embodiment of the present disclosure;
FIG. 2 is a schematic structural view of a battery provided by an embodiment of the present disclosure;
FIG. 3 is a schematic structural view of a top cover assembly provided by an embodiment of the present disclosure;
FIG. 4 is an exploded schematic structural view of the top cover assembly illustrated in FIG. 3;
FIG. 5 is a schematic structural view of a top cover of the top cover assembly illustrated in FIG. 3 from a perspective;
FIG. 6 is a schematic structural view of a top cover of the top cover assembly illustrated in FIG. 3 from another perspective;
FIG. 7 is a cross-sectional schematic view of a partial structure taken along a section line A-A illustrated in FIG. 3;
FIG. 8 is a schematic structural view of a lower plastic part of the top cover assembly illustrated in FIG. 3 from a perspective;
FIG. 9 is a schematic structural view of a lower plastic part of the top cover assembly illustrated in FIG. 3 from another perspective;
FIG. 10a is a schematic view of a partial structure of the lower plastic part illustrated in FIG. 8 from a perspective;
FIG. 10b is a cross-sectional schematic view of a partial structure of the lower plastic part taken along a section line B-B shown in FIG. 8;
FIG. 11 is a schematic structural view of a lower plastic part of the top cover assembly shown in FIG. 3 from a further perspective;
FIG. 12 is a cross-sectional schematic view of a partial structure of the top cover assembly taken along a section line C-C shown in FIG. 3;
FIG. 13 is a cross-sectional schematic view of a partial structure of the top cover assembly taken along a section line E-E shown in FIG. 3;
FIG. 14 is a schematic structural view of a partial structure of the top cover assembly shown in FIG. 3; and
FIG. 15 is a schematic structural view of a support member of the top cover assembly shown in FIG. 3 from a perspective.

Reference numerals:
energy storage system 400, electric energy conversion device 410, first user load 420, second user load 430, power consumption device 300, battery 200, top cover assembly 100, housing 210, electrode assembly 220, top cover 10, upper plastic part 20, lower plastic part 30, pole 40, connection sheet 51, sealing ring 52, pressure ring 53, limiting body 54, support member 60, heat insulation sheet 70, explosion-proof valve assembly 80, third surface 101, fourth surface 102, explosion-proof hole 11, mounting boss 12, groove 13, explosion-proof valve 81, explosion-proof valve protection sheet 82, lower plastic part body 31, central protrusion 32, cavity 33, first surface 311, second surface 312, bottom surface 321, first side surface 322, second side surface 323, first vent 324, second vent 325, third vent 326, partition 34, snap 341, guide inclined surface 342, mounting recess 35, first side wall 351, second side wall 352, third side wall 353, fourth side wall 354, a first hole group 36, a second hole group 37, sixth vent 361, seventh vent 362, first annular ring T1, eighth vent 371, ninth vent 372, second annular ring T2, protrusion 301, gas release recess 302, first edge protrusion 38, second edge protrusion 39, fourth vent 381, fifth vent 391, first gas channel S1, second gas channel S2, third gas channel S3, fourth gas channel S4, main body 61, first fixing portion 62, second fixing portion 63, first support surface 611, second support surface 612, first connection surface 613, second connection surface 614, first transition surface 615, second transition surface 616, first sub-surface 6131, second sub-surface 6132, third sub-surface 6141, fourth sub-surface 6142, first avoidance groove 64, second avoidance groove 65.

### DETAILED DESCRIPTION

For ease of understanding, the terms involved in the embodiments of the present disclosure are explained first.

The term "and/or" only represents a relationship between correlated objects, including three relationships. For example, "A and/or B" may mean three situations: A only, B only, or both A and B.

"A plurality of" refers to two or more than two.

"Connection" shall be understood in a broad sense. For example, A being connected to B may mean that A is directly connected to B, or that A is indirectly connected to B through an intermediate medium.

Specific embodiments of the present disclosure will be clearly described below with reference to the accompanying drawings.

The embodiments of the present disclosure provide a top cover assembly, a battery, and a power consumption device.

Since energy demands for users have strong temporal and spatial properties. In order for rational utilization of energy and an improvement in a utilization rate of energy, it is necessary to employ a medium or device to store energy in one energy form or of another energy form converted from one energy form and then release the stored energy in a specific form of energy based on the demands of forthcoming applications. It is common knowledge that, currently, the generation of green electric energy is often dependent on photovoltaic energy, wind power, potential energy of water, and the like. However, wind energy and solar energy generally pose challenges due to their intermittent nature and great fluctuating nature, which would result in power grid instability, with insufficient electricity during peak demand and electricity excess during off-peak periods. In addition, unstable voltage may also cause damage to the power system. Therefore, failure to meet power demand or inadequate power grid capacity may lead to the problem of "Forced Abandonment of Wind and Light". To address these challenges, energy storage is crucial, i.e., the electric energy is stored by converting the electric energy into other forms of energy through physical or chemical means and released when needed by converting it back into the electric energy. In a nutshell, energy storage can be likened to a large-scale "power bank" that stores the electric energy when photovoltaics and wind power are abundant, and releases the stored electricity when needed.

By taking electrochemical energy storage as an example, the embodiments of the present disclosure provide a power consumption device internally provided with a chemical battery that mainly utilizes chemical elements within it as an energy storage medium, and chemical reactions or transformations of the energy storage medium occur during charging and discharging of the battery. In simple terms, electric energy generated by wind energy and solar energy is stored in the chemical battery. In a case where the use of external electric energy reaches a peak, the stored electric energy is released for use or is transferred to a place with a shortage of electricity for use.

Currently, energy storage finds extensive applications in various scenes, including power-generation-side energy storage, grid-side energy storage, renewable energy grid-connected energy storage, and user-side storage. The corresponding power consumption device includes types as described below.

The power consumption device includes a large-scale energy storage container applied in a grid-side energy storage scene. The container, serving as high-quality active and reactive power regulation sources in the power grid, realizes load matching of electric energy in time and space, enhances renewable energy absorption and consumption capability, and is of great significance in aspects like standby of a power grid system, alleviation of peak-load power supply pressure, and peak regulation and frequency modulation.

The power consumption device includes a small and medium-sized energy-saving electric cabinet applied in user-side industrial and commercial energy storage scenes and a household small energy storage box applied in a user-side household energy storage scene, with a main operating mode being "peak shaving and valley filling". Since there is a significant price difference in electricity charges between a peak period and an off-peak period of power consumption demands, customers having power consumption devices typically charge them during low-price periods of the electricity charges to reduce costs. Then, during high-price periods of the electricity charges, the electricity stored in the power consumption device is discharged to use, so as to save on electricity expenses. In addition, in remote areas or regions with frequent natural disasters like earthquakes and hurricanes, the presence of household energy storage devices serves as backup power sources for users themselves and the power grid, thereby avoiding any inconvenience of frequent power failures caused by disasters or other factors.

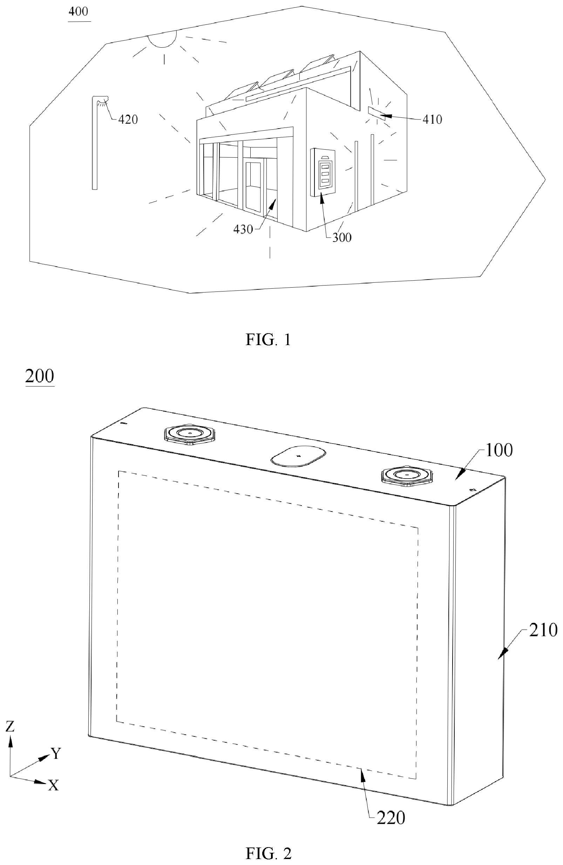

Referring to FIG. 1, FIG. 1 is a schematic structural view of an energy storage system 400 provided in an embodiment of the present disclosure. According to the embodiments of the present disclosure, a household energy storage scene regarding the user-side energy storage is taken as an example for description. The power consumption device300 in the present disclosure is not limited to the household energy storage scene.

The embodiments of the present disclosure provide an energy storage system 400 including an electric energy conversion device 410, a first user load 420, a second user load 430, and a power consumption device 300. The power consumption device 300 is a small-sized energy storage box, which can be mounted at an outdoor wall in a wall-mounted manner. In an example, a photovoltaic panel can convert the solar energy into the electric energy in the period with low electricity charges. The power consumption device 300 is used for storing the electric energy and supplying the electric energy to a street lamp and a household appliance for use in a case where the electricity price peak occurs or supplying power in the event of power grid outages or blackouts.

The power consumption devices 300 may include, but are not limited to, a single battery cell, a battery module, a battery pack, a battery system, and the like. When the power consumption device 300 includes a plurality of batteries 200, the plurality of batteries 200 are electrically connected and each located inside a casing of the power consumption device 300. The plurality of batteries 200 may be protected from interference of an external environment under the protection of the housing. Exemplarily, the plurality of batteries 200 are arranged at intervals. The plurality of batteries 200 may be connected in series, in parallel, or in a combination mode including series and parallel connections, to achieve a relatively large capacity and relatively large power. According to the embodiments of the present disclosure, the power consumption device 300 including the battery 200 is taken as an example for description, but it should be understood that the power consumption device 300 is not limited thereto.

Optionally, the battery 200 may be a secondary battery referring to a battery cell that, after being discharged, may activate active materials by charging and is capable of continuous use. The battery 200 may be a lithium ion battery, a sodium ion battery, a sodium lithium ion battery, a lithium metal battery, a sodium metal battery, a lithium sulfur battery, a magnesium ion battery, a nickel metal hydride battery, a nickel cadmium battery, a lead storage battery, or the like, which is not specifically limited in the present disclosure.

Referring to FIG. 2, FIG. 2 is a schematic structural view of a battery 200 provided in an embodiment of the present disclosure.

For ease of description below, a length direction of the battery 200 is defined as an X direction, a width direction of the battery 200 is defined as a Y direction, and a height direction of the battery 200 is defined as a Z direction. Two of the X direction, the Y direction, and the Z direction are perpendicular to each other.

The battery 200 may include a top cover assembly 100, a housing 210, and an electrode assembly 220. The top cover assembly 100 is connected to the housing 210. Moreover, a receiving space is defined by the top cover assembly 100 and the housing 210, and the electrode assembly 220 is located in the receiving space. In an example, the top cover assembly 100 may be welded to the housing 210 by welding. The housing 210 may be made of a metal material, such as aluminum alloy or the like. The battery 200 may be a cylindrical battery 200, a prismatic battery 200, or the like.

The electrode assembly 220 may include at least two battery cells (not shown). The at least two battery cells are sequentially arranged in the thickness direction of the battery 200. The arrangement of a plurality of battery cells may increase a capacity of the battery 200, which enables the battery 200 to be used for a long time, thereby expanding application scenes of the battery 200. Each battery cell may include a jelly roll, a first tab, and a second tab. Both the first tab and the second tab are connected to the jelly roll. The first tab and the second tab have opposite polarities. One of the first tab and the second tab is a positive tab, and the other one of the first tab and the second tab is a negative tab.

It should be noted that the purpose of FIG. 2 is only to schematically illustrate a connection relationship between the top cover assembly 100, the housing 210, and the electrode assembly 220, and does not specifically limit connection positions, specific structures, and quantities of various components. The structure illustrated in the embodiments of the present disclosure does not constitute a specific limitation to the battery 200. In other embodiments of the present disclosure, the battery 200 may include more or fewer components than those shown in FIG. 2, or combine certain components, or split certain components, or adopt different component arrangements. The components shown in the drawings may be implemented in hardware, software, or a combination of software and hardware.

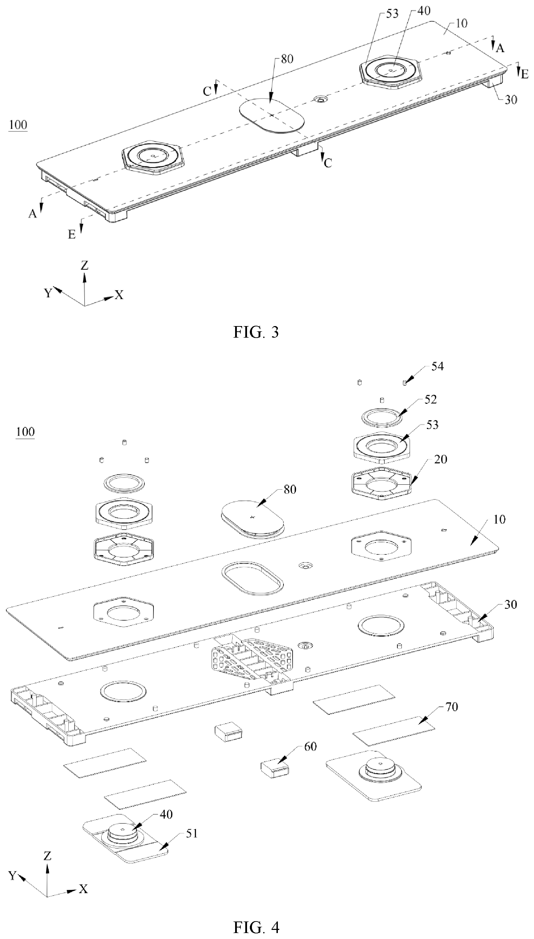

Referring to FIG. 3 and FIG. 4, FIG. 3 is a schematic structural view of a top cover assembly 100 provided in an embodiment of the present disclosure, and FIG. 4 is an exploded schematic structural view of the top cover assembly 100 shown in FIG. 3.

In this embodiment, the top cover assembly 100 may include a top cover 10, an upper plastic part 20, a lower plastic part 30, a pole 40, a connection sheet 51, a sealing ring 52, a pressure ring 53, a limiting body 54, a support member 60, a heat insulation sheet 70, and an explosion-proof valve assembly 80.

Both the upper plastic part 20 and the lower plastic part 30 are mounted on the top cover 10. The upper plastic part 20 is mounted at a side of the top cover 10 in a thickness direction of the top cover 10 (the Z direction shown in the drawings), and the lower plastic part 30 is mounted at the other side of the top cover 10 in the thickness direction of the top cover 10. Moreover, the lower plastic part 30 and the upper plastic part 20 respectively protrude from two opposite surfaces of the top cover 10 in the thickness direction of the top cover 10. The number of upper plastic parts 20 may be two. The two upper plastic parts 20 are spaced apart from each other and mounted at two sides of the top cover 10 in a length direction of the top cover 10 (the X direction shown in the drawings).

The pole 40 is mounted on the top cover 10, the upper plastic part 20, and the lower plastic part 30, and is insulated from the top cover 10 through the upper plastic part 20, the lower plastic part 30, and the sealing ring 52. The pole 40 may also serve as an electrode of the battery 200 to be lead out, to achieve an electrical connection between the battery 200 and an external device. The number of poles 40 may be two. The two poles 40 may be a negative pole 40 and a positive pole 40, respectively. The two poles 40 may be spaced apart from each other in the length direction of the top cover 10. Each pole 40 is mounted on the lower plastic part 30, the top cover 10, one upper plastic part 20, and one pressure ring 53.

The connection sheet 51 is located on a side of the lower plastic part 30 away from the top cover 10, and is connected to the pole 40 and welded to a tab of the electrode assembly 220, to realize an electrical connection between the pole 40 and the electrode assembly 220. The number of connection sheets 51 may be two. The two connection sheets 51 may be configured as a positive connection sheet 51 and a negative connection sheet 51, respectively. The two connection sheets 51 may be spaced apart from each other in a length direction of the lower plastic part 30 (the X direction shown in the drawings). Each of the two connection sheets 51 is connected to one pole 40.

The sealing ring 52 is sleeved around the pole 40, and is located between the lower plastic part 30 and the pole 40. The sealing ring 52 can be arranged between the top cover 10 and the pole 40. The sealing ring 52 may be used to seal a gap between the top cover 10 and the pole 40, to avoid a reduction in insulation between the top cover 10 and the pole 40 and a reduction in safety of the electrode assembly 220 caused by intrusion of an electrolyte into this gap. The number of sealing rings 52 may be two. For the two sealing rings 52, one of the sealing rings 52 is sleeved around the positive pole 40, and the other one of the sealing rings 52 is sleeved around the negative pole 40.

The pressure ring 53 is mounted on the upper plastic part 20, is sleeved around the pole 40, and is electrically connected to the pole 40. The number of pressure rings 53 may be two. The two pressure rings 53 are respectively mounted on the two upper plastic parts 20, and are respectively electrically connected to the two poles 40.

The limiting body 54 penetrates the upper plastic part 20 and is located between the pressure ring 53 and the top cover 10. A plurality of limiting bodies 54 may be provided. The plurality of limiting bodies 54 are arranged at intervals and inserted through each of the two upper plastics 20, and are located between the top cover 10 and the respective one of the two pressure rings 53. Exemplarily, the number of limiting bodies 54 may be six. Three of the six limiting bodies 54 are arranged at intervals and inserted through one of the upper plastic parts 20, and are located between the top cover 10 and one of the pressure rings 53. The other three limiting bodies 54 are arranged at intervals and inserted through the other one of the upper plastic parts 20, and are located between the top cover 10 and the other one of the pressure rings 53.

The support member 60 is mounted on the lower plastic part 30 and located between the lower plastic part 30 and the top cover 10. The support member 60 abuts against the lower plastic part 30 and is configured to support the top cover 10. When thermal runaway occurs in the battery cell, the support member 60 may be disposed between the battery cell and the top cover 10 to provide a supporting effect, to keep a certain distance between the battery cell and the top cover 10, which prevents the battery cell from floating up to approach the top cover 10, thereby inhibiting electric sparks from splashing out of the explosion-proof valve 81 and preventing a risk of the battery cell catching fire.

The heat insulation sheet 70 is located between the lower plastic part 30 and the connection sheet 51, to play a good heat insulation role. The number of heat insulation sheets 70 may be four. Two of the four heat insulation sheets 70 are located between the top cover 10 and one of the connection sheets 51, and the other two heat insulation sheets 70 are located between the top cover 10 and the other one of the connection sheets 51.

The explosion-proof valve assembly 80 is mounted on the top cover 10 and used for pressure relief protection of the battery 200.

Structures of various components in the top cover assembly 100 and an assembly relationship between the components will be described in detail below with reference to the accompanying drawings.

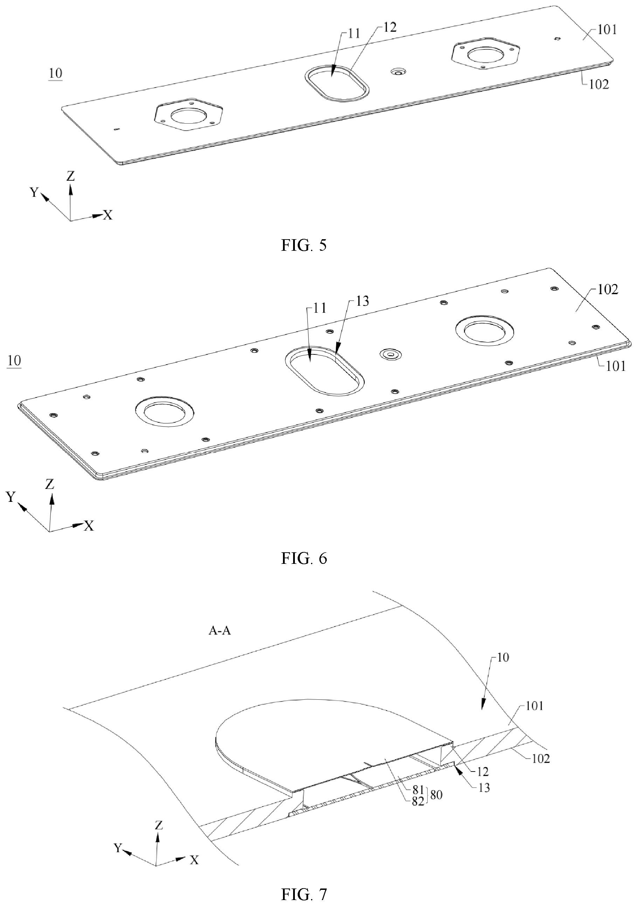

Referring to FIG. 5 and FIG. 6, FIG. 5 is a schematic structural view of a top cover 10 of the top cover assembly 100 shown in FIG. 3 from a perspective, and FIG. 6 is a schematic structural view of a top cover 10 of the top cover assembly 100 shown in FIG. 3 from another perspective.

The top cover 10 may have a third surface 101 and a fourth surface 102 arranged opposite to the third surface 101 in the thickness direction of the top cover 10 (the Z direction shown in the drawings). The third surface 101 may face away from the electrode assembly 220, and the fourth surface 102 may face towards the electrode assembly 220.

The top cover 10 may have an explosion-proof hole 11 extending through the top cover 10 in the thickness direction of the top cover 10. Exemplarily, the explosion-proof hole 11 may be located at a central position of the top cover 10.

The top cover 10 may be provided with a mounting boss 12 and a groove 13. The mounting boss 12 may be disposed on the third surface 101 and protrude from the third surface 101 away from the top cover 10. The mounting boss 12 may also be arranged around an outer edge of the explosion-proof hole 11. An opening of the groove 13 may be located on the fourth surface 102. The groove 13 may be recessed from the fourth surface 102 into the top cover 10. The groove 13 may be arranged coaxially with and be in communication with the explosion-proof hole 11.

Referring to FIG. 7, FIG. 7 is a cross-sectional schematic view of a partial structure taken along a section line A-A shown in FIG. 3.

The explosion-proof valve assembly 80 may include an explosion-proof valve 81 and an explosion-proof valve protection sheet 82. Both the explosion-proof valve 81 and the explosion-proof valve protection sheet 82 may be mounted on the top cover 10 and arranged sequentially in the thickness direction of the top cover 10. In some embodiments, the explosion-proof valve 81 may be located at the groove 13 of the top cover 10 and cover an opening of the explosion-proof hole 11 located on the fourth surface 102 of the top cover 10. The explosion-proof valve protection sheet 82 may be connected to the mounting boss 12 of the top cover 10 and cover an opening of the explosion-proof hole 11 located on the third surface 101 of the top cover 10. The explosion-proof valve protection sheet 82 may also cover the explosion-proof valve 81.

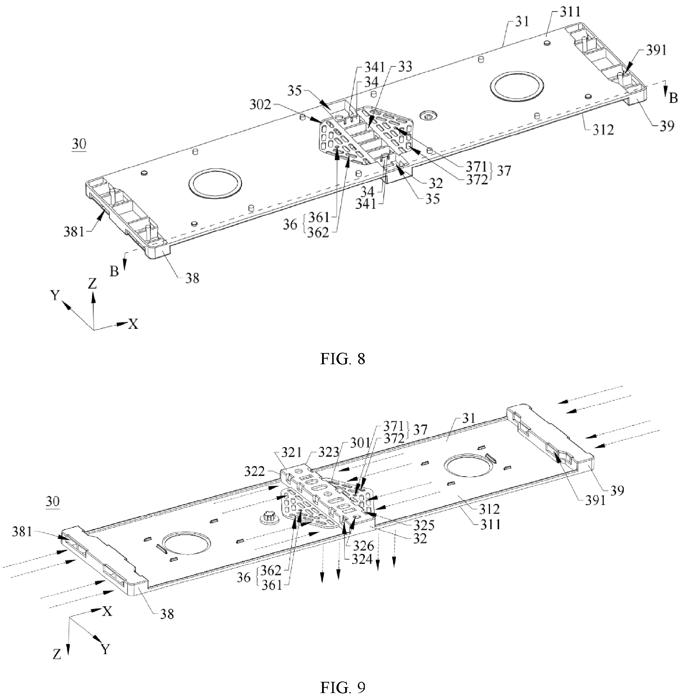

Referring to FIG. 8 and FIG. 9, FIG. 8 is a schematic structural view of a lower plastic part 30 of the top cover assembly 100 shown in FIG. 3 from a perspective, and FIG. 9 is a schematic structural view of a lower plastic part 30 of the top cover assembly 100 shown in FIG. 3 from another perspective. In FIG. 9, dashed arrows indicate venting paths.

The lower plastic part 30 and the top cover 10 may be stacked with each other. The lower plastic part 30 may include a lower plastic part body 31 and a central protrusion 32. The lower plastic part body 31 is located at a side of the top cover 10 in the thickness direction of the top cover 10 and is fixedly connected to the top cover 10, to achieve a fixed connection between the lower plastic part 30 and the top cover 10. The central protrusion 32 may be fixedly connected to the lower plastic part body 31 and protrude from the second surface 312 of the lower plastic part body 31. The central protrusion 32 may be configured to abut against the electrode assembly 220.

In some embodiments, the lower plastic part body 31 may include a first surface 311 and a second surface 312. The second surface 312 may be arranged opposite to the first surface 311 in the thickness direction of the lower plastic part 30 (the Z direction shown in the drawings). The first surface 311 may face towards the fourth surface 102 of the top cover 10, and the second surface 312 may face towards the electrode assembly 220.

The lower plastic part 30 may have a cavity 33. The cavity 33 may be located at the lower plastic part body 31 and the central protrusion 32. An opening of the cavity 33 may be located at the first surface 311 of the lower plastic part body 31. The cavity 33 may be recessed from the first surface 311 of the lower plastic part body 31 into the lower plastic part body 31 and the central protrusion 32. In the thickness direction of the lower plastic part 30, the cavity 33 may extend from the lower plastic part body 31 to the central protrusion 32. In a width direction of the lower plastic part 30, the cavity 33 may extend from a side of the lower plastic part 30 to the other side of the lower plastic part 30.

The central protrusion 32 may be arranged to face towards the explosion-proof hole 11 of the top cover 10 in the Z direction. In the Z direction, a projection of the central protrusion on the top cover 10 may partially overlap with the explosion-proof hole 11 of the top cover 10. That is, a part of the central protrusion 32 may be covered by a projection of the explosion-proof hole 11 of the top cover 10 on the lower plastic part 30 in the Z direction. The central protrusion 32 may include a bottom surface 321, a first side surface 322, and a second side surface 323. The bottom surface 321 may be spaced apart from the second surface 312 of the lower plastic part body 31 in the thickness direction of the lower plastic part 30. Each of the first side surface 322 and the second side surface 323 may be connected between the bottom surface 321 and the second surface 312 of the lower plastic part body 31. The first side surface 322 and the second side surface 323 may be arranged opposite to each other and spaced apart from each other in the length direction of the lower plastic part 30 (the X direction shown in the drawings).

The central protrusion 32 may have a plurality of first vents 324 and a plurality of second vents 325. The plurality of first vents 324 may be arranged at intervals in the width direction of the lower plastic part 30 (the Y direction shown in the drawings). The plurality of first vents 324 may have similar structures, the same structure, or different structures. Each of the first vents 324 is located on the first side surface 322 and the bottom surface 321, and extends through the central protrusion 32 in each of the length direction and the thickness direction of the lower plastic part 30 (the Z direction shown in the drawings). Each of the first vents 324 may be in communication with the cavity 33, i.e., each of the first vents 324 is a through hole. A part of each of the first vents 324 is located on the first side surface 322, and another part of each of the first vents 324 is located on the bottom surface 321. The plurality of second vents 325 may be arranged at intervals in the width direction of the lower plastic part 30. The plurality of second vents 325 may have similar structures, the same structure, or different structures. Each of the second vents 325 is located on the second side surface 323 and the bottom surface 321, and extends through the central protrusion 32 in each of the length direction and the thickness direction of the lower plastic part 30. Each of the second vents 325 may be in communication with the cavity 33, i.e., each of the second vents 325 is a through hole. A part of each of the second vents 325 is located on the second side surface 323, and another part of each of the first vents 324 is located on the bottom surface 321.

Exemplarily, the number of first vents 324 may be five. The five first vents 324 are arranged at intervals in the width direction of the lower plastic part 30. The number of second vents 325 may be five. The five second vents 325 are arranged at intervals in the width direction of the lower plastic part 30.

It can be understood that by forming the plurality of first vents 324 and the plurality of second vents 325 at the side surfaces of the central protrusion 32, the number of venting channels on the lower plastic part 30 can be increased, a venting rate of gas inside the battery cell upon the thermal runaway of the battery cell can be improved, and thus safety performance of the top cover assembly 100 can be improved.

The central protrusion 32 may have a plurality of third vents 326. The plurality of third vents 326 may have similar structures, the same structure, or different structures. The plurality of third vents 326 are arranged at intervals on the bottom surface 321 in the width direction of the lower plastic part 30. Each of the third vents 326 extends through the central protrusion 32 in the thickness direction of the lower plastic part 30 and is in communication with the cavity 33. That is, each of the third vents 326 is a through hole. Exemplarily, the number of third vents 326 may be nine. The nine third vents 326 may be arranged at intervals in the width direction of the lower plastic part 30. The nine third vents 326 may include three circular holes, two rectangular holes, two elliptical holes with relatively small dimensions, and two elliptical holes with relatively large dimensions.

It can be understood that by forming the plurality of third vents 326 on the bottom surface 321 of the central protrusion 32, the number of venting channels on the lower plastic part 30 can be maximized, while ensuring a strength of the central protrusion 32. In this way, more gas paths can be provided for the gas inside the battery cell. Stress exerted on the lower plastic part 30 is dispersed when the thermal runaway occurs in the battery cell, avoiding failure of the top cover assembly 100 caused by stress concentration, and achieving high reliability.

Further referring to FIG. 8 and FIG. 9, the lower plastic part 30 may further include a partition 34. Two ends of the partition 34 are connected to two side walls of the cavity 33 arranged opposite to each other in the length direction of the lower plastic part 30, respectively. The partition 34 is further connected to the bottom wall of the cavity 33. A side of the partition 34 away from the bottom wall of the cavity 33 may be provided with a snap 341. The partition 34 may be engaged with an inner wall of the cavity 33 to divide the cavity 33 to form a mounting recess 35 in the cavity 33. The mounting recess 35 may be located at the lower plastic part body 31 and the central protrusion 32. An opening of the mounting recess 35 may be located at the first surface 311 of the lower plastic part body 31. The mounting recess 35 may be in communication with at least one of the plurality of first vents 324, at least one of the plurality of third vents 326, and at least one of the plurality of second vents 325.

A plurality of partitions 34 may be provided. The plurality of partitions 34 may have the same structure or different structures. The plurality of partitions 34 may be engaged with the inner wall of the cavity 33 to divide the cavity 33 so as to form a plurality of mounting recesses 35 in the cavity 33. Exemplarily, the number of partitions 34 may be two. The two partitions 34 may be respectively located at two sides of the lower plastic part 30 in the width direction of the lower plastic part 30 and spaced apart from each other. The two partitions 34 may cooperate with the inner wall of the cavity 33 to form two mounting recesses 35 in the cavity 33. The two mounting recesses 35 may be spaced apart from each other in the width direction of the lower plastic part 30.

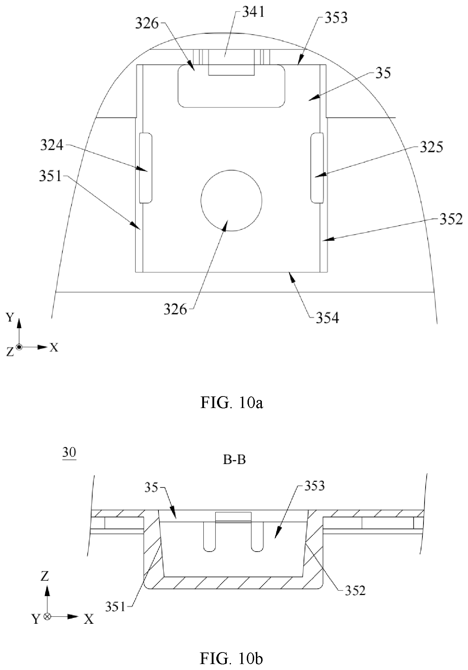

Referring to FIG. 8, FIG. 10a, and FIG. 10b, FIG. 10a is a schematic view of a partial structure of the lower plastic part 30 shown in FIG. 8 from a perspective, FIG. 10b is a cross-sectional schematic view of a partial structure of the lower plastic part 30 taken along a section line B-B shown in FIG. 8.

The mounting recess 35 may include a first side wall 351, a second side wall 352, a third side wall 353, and a fourth side wall 354. The first side wall 351 and the second side wall 352 may be arranged opposite to each other and spaced apart from each other in the length direction of the lower plastic part 30 (the X direction shown in the drawings). That is, the first side wall 351 and the second side wall 352 are two side walls of the mounting recess 35 arranged opposite to each other in the length direction of the lower plastic part 30. Each of the third side wall 353 and the fourth side wall 354 is connected between the first side wall 351 and the second side wall 352. The fourth side wall 354 and the third side wall 353 are arranged opposite to each other and spaced apart from each other in the width direction of the lower plastic part 30 (the Y direction shown in the drawings). That is, the third side wall 353 and the fourth side wall 354 are the two side walls of the mounting recess 35 arranged opposite to each other in the width direction of the lower plastic part 30.

The first side wall 351 is disposed adjacent to the first side surface 322, and the second side wall 352 is disposed adjacent to the second side surface 323. Each of the first side wall 351 and the second side wall 352 may be inclined surfaces arranged obliquely with respect to the bottom wall of the mounting recess 35. Extending directions of the first side wall 351 and the second side wall 352 may intersect. A distance between the first side wall 351 and the second side wall 352 in the length direction of the lower plastic part 30 may gradually decrease in a direction from the first surface 311 to the second surface 312 of the lower plastic part body 31.

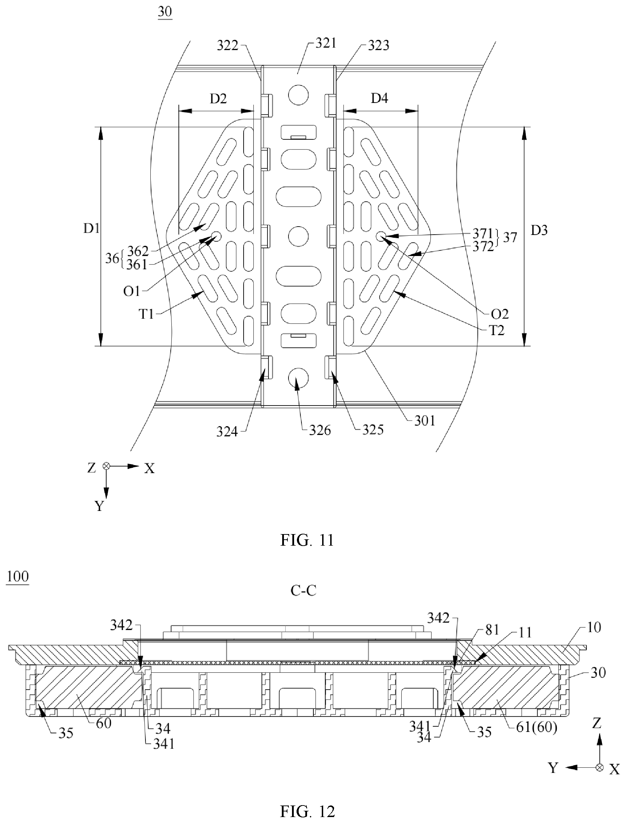

Referring to FIG. 9 and FIG. 11, FIG. 11 is a schematic structural view of a lower plastic part 30 of the top cover assembly 100 shown in FIG. 3 from a further perspective.

The lower plastic part 30 may have a first hole group 36 and a second hole group 37. In the length direction of the lower plastic part 30, the first hole group 36 and the second hole group 37 are respectively located at two sides of the central protrusion 32 and are both disposed adjacent to the central protrusion 32. The first hole group 36 and the second hole group 37 may be arranged symmetrically.

The first hole group 36 may include a sixth vent 361 and a plurality of seventh vents 362. Each of the sixth vent 361 and the plurality of seventh vents 362 may extend through the lower plastic part 30 in the thickness direction of the lower plastic part 30. The sixth vent 361 may be located at a central position of the first hole group 36. The plurality of seventh vents 362 may have similar structures, the same structure, or different structures. In a direction outward from a center line O1 of the sixth vent 361 in the width direction of the lower plastic part 30, the plurality of seventh vents 362 may be arranged in a form of at least two first annular rings T1 which are sequentially sleeved around the sixth vent 361 at intervals. Seventh vents of the plurality of seventh vents 362 located on the same one of the at least two first annular rings T1 are arranged at intervals. Seventh vents of the plurality of seventh vents 362 located on different first annular rings of the at least two first annular rings T1 are also arranged at intervals. In the Z direction, a projection of the explosion-proof hole 11 of the top cover 10 on the lower plastic part body 31 at least partially covers a part of a projection of the central protrusion 32 on the lower plastic part body 31 and a part of a projection of the plurality of seventh vents on the lower plastic part body 31. That is, the projection of the explosion-proof hole 11 of the top cover 10 on the lower plastic part 30 in the Z direction at least covers a part of the central protrusion 32 and a part of the plurality of seventh vents 362.

Exemplarily, the sixth vent 361 may be in a circular shape. The seventh vent 362 may be in an elliptical shape. The number of sixth vents 361 may be one. The number of seventh vents 362 may be eighteen. In the direction outward from the center line of the sixth vent 361 in the width direction of the lower plastic part 30, the eighteen seventh vents 362 may be arranged in the form of the at least two first annular rings T1 that are sequentially sleeved around the sixth vent 361 at intervals. The inner first annular ring T1 has six seventh vents 362, and the outer first annular ring T1 has twelve seventh vents 362.

It can be understood that by configuring the projection of the explosion-proof hole 11 on the lower plastic part 30 in the Z direction to at least cover a part of the central protrusion 32 and a part of the plurality of seventh vents 362, the first hole group 36 may serve as a venting structure disposed around the explosion-proof hole 11. This arrangement enables the first hole group 36 to be arranged to face towards the explosion-proof hole 11 in the Z direction. In this way, when the thermal runaway occurs in the battery cell, the gas inside the battery cell can be directly discharged from the explosion-proof valve 81 through the first hole group 36, shortening the venting path of the gas inside the battery cell. A problem that the gas inside the battery cell cannot be effectively discharged through the explosion-proof valve 81 due to blockage of the venting channel at the top cover 10 is avoided, preventing excessive pressure inside the battery cell and an explosion, and thus effectively improving the safety performance of the top cover assembly 100.

In addition, the sixth vent 361 is formed at the central position of the first hole group 36, and the plurality of seventh vents 362 are arranged on the outer side of the sixth vent 361, and in the form of at least two first annular rings T1 which are in a nested configuration. It is possible to reduce a diameter of vents of the lower plastic part 30 around the explosion-proof valve 81 on the basis of ensuring that a total volume of the venting channels in the lower plastic part 30 is not reduced. In this way, it prevents the occurrence of a problem where the tab of the battery cell is in contact with the top cover 10 through the vents and causes a short circuit, allowing the vents in the first hole group 36 to have a relatively compact structural arrangement. An arrangement density of the vents in the first hole group 36 is increased, thereby improving the venting reliability of the lower plastic part 30.

Further referring to FIG. 9 and FIG. 11, a dimension D1 of each of the at least two first annular rings T1 in the width direction of the lower plastic part 30 is greater than a dimension D2 of each of the at least two first annular rings T1 in the length direction of the lower plastic part 30. Moreover, the dimension D2 of each of the at least two first annular rings T1 in the length direction of the lower plastic part 30 gradually increases and then gradually decreases from one side of the lower plastic part 30 in the width direction of the lower plastic part 30 towards the other side of the lower plastic part 30 in the width direction of the lower plastic part 30. Exemplarily, the first annular ring T1 may be in a triangular shape.

It can be understood that by setting the dimension D1 of each of the at least two first annular rings T1 in the width direction of the lower plastic part 30 is greater than the dimension D2 of each of the at least two first annular rings T1 in the length direction of the lower plastic part 30, more seventh vents 362 in the same first annular ring T1 may be arranged adjacent to the explosion-proof hole 11 of the top cover 10, which thus can effectively shorten a gas flow path, enabling the gas to pass through more quickly and conveniently. In addition, the dimension D2 of each of the at least two first annular rings T1 in the length direction of the lower plastic part 30 gradually increases and then gradually decreases from one side of the lower plastic part 30 in the width direction of the lower plastic part 30 towards the other side of the lower plastic part 30 in the width direction of the lower plastic part 30, each first annular ring T1 may be arranged in a triangular shape, to facilitate a small-aperture and high-density arrangement of the vents.

The second hole group 37 may include an eighth vent 371 and a plurality of ninth vents 372. Each of the eighth vent 371 and the plurality of ninth vents 372 may extend through the lower plastic part 30 in the thickness direction of the lower plastic part 30. The eighth vent 371 may be located at a central position of the second hole group 37. The plurality of ninth vents 372 may have similar structures, the same structure, or different structures. In a direction outward from a center line O2 of the eighth vent 371 in the width direction of the lower plastic part 30, the plurality of ninth vents 372 may be arranged in a form of at least two second annular rings T2 which are sequentially sleeved around the eighth vent 371 at intervals. Ninth vents of the plurality of ninth vents 372 located on the same one of the at least two second annular rings T2 are arranged at intervals. Ninth vents of the plurality of ninth vents 372 located on different second annular rings of the at least two second annular rings T2 are also arranged at intervals. In the Z direction, the projection of the explosion-proof hole 11 of the top cover 10 on the lower plastic part body 31 at least partially covers a part of the projection of the central protrusion 32 on the lower plastic part body 31 and a part of the projection of the plurality of ninth vents 372 on the lower plastic part body 31. That is, the projection of the explosion-proof hole 11 of the top cover 10 on the lower plastic part 30 in the Z direction at least covers a part of the central protrusion 32 and a part of the plurality of ninth vents 372.

Exemplarily, the eighth vent 371 may be in a circular shape. The ninth vent 372 may be in an elliptical shape. The number of eighth vents 371 may be one. The number of ninth vents 372 may be eighteen. In the direction outward from the center line of the eighth vent 371 in the width direction of the lower plastic part 30, the eighteen ninth vents 372 may be arranged in the form of the at least two second annular rings T2 that are sequentially sleeved around the eighth vent 371 at intervals. The inner second annular ring T2 has six ninth vents 372, and the outer second annular ring T2 has twelve ninth vents 372.

It can be understood that by configuring the projection of the explosion-proof hole 11 on the lower plastic part 30 in the Z direction to at least cover a part of the central protrusion 32 and a part of the plurality of ninth vents 372, the second hole group 37 may serve as a venting structure arranged around the explosion-proof hole 11. This arrangement enables the second hole group 37 to be arranged to face towards the explosion-proof hole 11 in the Z direction. In this way, when the thermal runaway occurs in the battery cell, the gas inside the battery cell can be directly discharged from the explosion-proof valve 81 through the second hole group 37, shortening the venting path of the gas inside the battery cell. A problem that the gas inside the battery cell cannot be effectively discharged through the explosion-proof valve 81 due to the blockage of the venting channel at the top cover 10 is avoided, preventing the excessive pressure inside the battery cell and the explosion, and thus effectively improving the safety performance of the top cover assembly 100.

In addition, the eighth vent 371 is disposed at the central position of the second hole group 37, and the plurality of ninth vents 372 are arranged on the outer side of the eighth vent 371, and in the form of at least two second annular rings T2 which are in a nested configuration. It is possible to reduce the aperture diameter of the vents of the lower plastic part 30 around the explosion-proof valve 81 on the basis of ensuring that the total volume of the venting channels in the lower plastic part 30 is not reduced. In this way, it prevents the occurrence of the problem where the tab of the battery cell is in contact with the top cover 10 through the vents and causes the short circuit, allowing the vents in the second hole group 37 to have a relatively compact structural arrangement. An arrangement density of the vents in the second hole group 37 is increased, thereby improving the venting reliability of the lower plastic part 30.

Further referring to FIG. 9 and FIG. 11, a dimension D3 of each of the at least two second annular rings T2 in the width direction of the lower plastic part 30 is greater than a dimension D4 of each of the at least two second annular rings T2 in the length direction of the lower plastic part 30. Moreover, the dimension D4 of each of the at least two second annular rings T2 in the length direction of the lower plastic part 30 gradually increases and then gradually decreases from one side of the lower plastic part 30 in the width direction of the lower plastic part 30 towards the other side of the lower plastic part 30 in the width direction of the lower plastic part 30. Exemplarily, each of the second annular rings T2 may be in a triangular shape.

It can be understood that the dimension D3 of each of the at least two second annular rings T2 in the width direction of the lower plastic part 30 is configured to be greater than the dimension D4 of each of the at least two second annular rings T2 in the length direction of the lower plastic part 30, more ninth vents 372 in the same second annular ring T2 can be arranged adjacent to the explosion-proof hole 11 of the top cover 10, which thus can effectively shorten the gas flow path, enabling the gas to pass through more quickly and conveniently. In addition, by configuring the dimension D4 of each of the at least two second annular rings T2 in the length direction of the lower plastic part 30 to gradually increase and then gradually decrease from one side of the lower plastic part 30 in the width direction of the lower plastic part 30 towards the other side of the lower plastic part 30 in the width direction of the lower plastic part 30, each second annular ring T2 can be arranged in a triangular shape, to facilitate the small-diameter and high-density arrangement of the vents.

Referring to FIG. 8 and FIG. 9, the lower plastic part 30 may further include a protuberance 301. The protuberance 301 may be located at two sides of the central protrusion 32 in the width direction of the central protrusion 32 (the X direction shown in the drawings), connected to each of the lower plastic part body 31 and the central protrusion 32, and protrude from the second surface 312 of the lower plastic part body 31. A protruding height of the protuberance 301 from the second surface 312 of the lower plastic part body 31 may be smaller than a protruding height of the central protrusion 32 from the second surface 312 of the lower plastic part body 31. The sixth vent 361, the plurality of seventh vents 362, the eighth vent 371, and the plurality of ninth vents 372 are each disposed at the protuberance 301 and extend through the protuberance 301 in the thickness direction of the lower plastic part 30.

The lower plastic part 30 may further have a gas release recess 302. The gas release recess 302 may be located at the lower plastic part body 31 and the protuberance 301. An opening of the gas release recess 302 is located at the first surface 311. The gas release recess 302 may be recessed from the first surface 311 of the lower plastic part body 31 towards the protuberance 301 and the central protrusion 32. The gas release recess 302 is further in communication with each of the cavity 33, the mounting recess 35, the sixth vent 361, the plurality of seventh vents 362, the eighth vent 371, and the plurality of ninth vents 372. In the thickness direction of the top cover assembly 100, a projection of the gas release recess 302 on the top cover 10 may cover the explosion-proof hole 11. That is, a projection of the gas release recess 302 on the top cover 10 in the Z direction may cover the explosion-proof hole 11 of the top cover 10.

It can be understood that by configuring the gas release recess 302 to be recessed at the first surface 311 of the lower plastic part 30, a certain gap may be reserved between the lower plastic part 30 and the top cover 10 by utilizing a space formed by the gas release recess 302. Thus, when the explosion-proof valve 81 mounted at the explosion-proof hole 11 of the top cover 10 performs venting on the battery cell, a gas flow discharge amount around the explosion-proof hole 11 can be increased, a venting effect of the explosion-proof valve 81 can be improved, and safety of the battery 200 can be ensured.

The lower plastic part 30 may further include a first edge protrusion 38 and a second edge protrusion 39. Each of the first edge protrusion 38 and the second edge protrusion 39 is connected to the lower plastic part body 31 and protrudes from the second surface 312 of the lower plastic part body 31. The first edge protrusion 38 is located at an end of the lower plastic part body 31 in a length direction of the lower plastic part body 31, and the second edge protrusion 39 is located at the other end of the lower plastic part body 31 in the length direction of the lower plastic part body 31. Each of the first edge protrusion 38 and the second edge protrusion 39 may be configured to abut against the electrode assembly 220.

The first edge protrusion 38 has a plurality of fourth vents 381. The plurality of fourth vents 381 may have similar structures, the same structure, or different structures. The plurality of fourth vents 381 are arranged at intervals in the width direction of the lower plastic part 30 and arranged to face towards the plurality of first vents 324 in the length direction of the lower plastic part 30. Each of the plurality of fourth vents 381 extends through the first edge protrusion 38 in the length direction of the lower plastic part 30. Exemplarily, the number of the fourth vents 381 may be four.

The second edge protrusion 39 has a plurality of fifth vents 391. The plurality of fifth vents 391 may have similar structures, the same structure, or different structures. The plurality of fifth vents 391 are arranged at intervals in the width direction of the lower plastic part 30 and arranged to face towards the plurality of second vents 325 in the length direction of the lower plastic part 30. Each of the fifth vents 391 extends through the second edge protrusion 39 in the length direction of the lower plastic part 30. Exemplarily, the number of the fifth vents 391 may be four.

It can be understood that by forming the plurality of fourth vents 381 at a side surface of the first edge protrusion 38 and the plurality of fifth vents 391 at a side surface of the second edge protrusion 39, venting paths from the two sides of the lower plastic part 30 in the length direction of the lower plastic part 30 to a central region of the lower plastic part 30 may be formed, which allows gas at the two sides of the lower plastic part 30 in the length direction of the lower plastic part 30 to pass through the first edge protrusion 38 and the second edge protrusion 39 respectively and converge towards the central protrusion 32, and then be centrally discharged to the outside of the battery 200 through the explosion-proof valve 81 mounted at the explosion-proof hole 11 of the top cover 10. The number of venting channels on the lower plastic part 30 is effectively increased, the venting rate of the gas inside the battery cell during the thermal runaway of the battery cell is improved, and the safety performance of the top cover assembly 100 is further improved.

Referring to FIG. 12, FIG. 12 is a cross-sectional schematic view of a partial structure of the top cover assembly 100 taken along a section line C-C shown in FIG. 3. The support member 60 may be located in the mounting recess 35 of the lower plastic part 30. In a thickness direction of the top cover assembly 100, a side of the support member 60 abuts against a bottom wall of the mounting recess 35, and the another side of the support member 60 is configured to support the top cover 10. The support member 60 may be made of an insulating and electrolyte-corrosion-resistant material. Exemplarily, the support member 60 may be entirely located in the mounting recess 35. The another side of the support member 60 may abut against the top cover 10 when the thermal runaway occurs in the battery cell, and there is a gap between the another side of the support member 60 and the top cover 10 under normal operating conditions of the support member 60. In the thickness direction of the lower plastic part 30, a distance of a gap between the support member 60 and the opening of the mounting recess may range from 0.1 mm to 0.2 mm (including endpoint values of 0.1 mm and 0.2 mm). The support member 60 may be made of ceramic.

It can be understood that when the thermal runaway occurs in the battery cell, the explosion-proof valve 81 mounted on the top cover 10 is liable to rupture. Flammable gas and electric sparks generated by the battery cell are released into air outside the battery 200 through the explosion-proof valve 81, and then react under the action of oxygen in the air, causing the battery cell to catch fire. Since a temperature of the battery cell during the thermal runaway is relatively high, the lower plastic part 30 is prone to melting at a high temperature, which makes it difficult for the lower plastic part 30 to play a blocking role when the battery cell floats up under the action of an electrolyte and air pressure. In this way, the distance between the battery cell and the top cover 10 becomes closer or even in contact, increasing an amount of flammable gas and electric sparks splashing out of the battery 200. A possibility of the flammable gas and electric sparks coming into contact with the oxygen in the air is further increased, escalating a risk of the battery cell ignition.

Thus, in the embodiments of the present disclosure, by providing an insulating and electrolyte-corrosion-resistant support member 60 between the lower plastic part 30 and the top cover 10, the top cover 10 can be effectively supported, improving a case where the lower plastic part 30 deforms at a high temperature in an early stage of the battery cell triggering the thermal runaway and loses its restricting effect on the battery cell. In addition, even if the lower plastic part 30 melts due to the thermal runaway of the battery cell, the support member 60 may still be supported between the top cover 10 and the battery cell, preventing the battery cell from floating up to approach the top cover 10, thereby inhibiting a phenomenon of the electric sparks splashing out of the explosion-proof valve 81 and reducing the risk of the battery cell catching fire.

In the embodiments of the present disclosure, the support member 60 may be fixed by the snap 341 of the partition 34. It can be understood that by engaging the support member 60 with the snap 341 of the partition 34, the fixed connection between the support member 60 and the lower plastic part 30 can be realized conveniently and quickly, thereby effectively limiting a movement of the support member 60, reducing a risk of the support member 60 being disengaged from the lower plastic part 30, and improving fixation stability and reliability of the support member 60.

The number of support members 60 may be one or more. When a plurality of support members 60 is provided, the plurality of support members 60 may have similar structures, the same structure, or different structures. The plurality of support members 60 are arranged at intervals between the top cover 10 and the lower plastic part 30. Each of the support members 60 is supported between the top cover 10 and the lower plastic part 30.

Exemplarily, the number of support members 60 may be two. In the Y direction, the two support members 60 may be respectively located at two sides of the explosion-proof hole 11 of the top cover 10. It can be understood that, compared with a case where one support member 60 is provided between the lower plastic part 30 and the top cover 10, two support members 60 are provided between the lower plastic part 30 and the top cover 10, and are respectively located at the two sides of the explosion-proof hole 11 of the top cover 10, a certain distance between the lower plastic part 30 and the top cover 10 can be more reliably maintained. Moreover, when the thermal runaway occurs in the battery cell, the two support members 60 have a stronger supporting effect on the battery cell, which can more effectively inhibit a phenomenon in which the electric sparks generated by the battery cell pass through the explosion-proof valve 81 to reach the exterior of the battery 200 and trigger ignition of the battery cell.

The support member 60 will be described in detail below by taking the structure of one support member 60 as an example. The following description of the structure of one support member 60 shall be applicable to other support members 60 without conflict.

In the embodiments of the present disclosure, as illustrated in FIG. 12, in the Z direction, a projection of the support member 60 on the top cover 10 partially covers the explosion-proof hole 11. That is, the projection of the support member 60 on the top cover 10 in the Z direction may cover a part of the explosion-proof hole 11 of the top cover 10. Alternatively, in the Z direction, the projection of the support member 60 on the top cover 10 is spaced apart from the explosion-proof hole 11. That is, the projection of the support member 60 on the top cover 10 in the Z direction may be spaced apart from the explosion-proof hole 11 of the top cover 10.

It can be understood that by disposing the support member 60 adjacent to the explosion-proof hole 11 of the top cover 10, a suitable spacing may be always maintained between the top cover 10 and the lower plastic part 30 around the explosion-proof hole 11. Thus, when the thermal runaway occurs in the battery cell, the support member 60 can exert a supporting force to support the battery cell at a closer distance, preventing the battery cell from moving towards the top cover 10, and achieving better reliability.

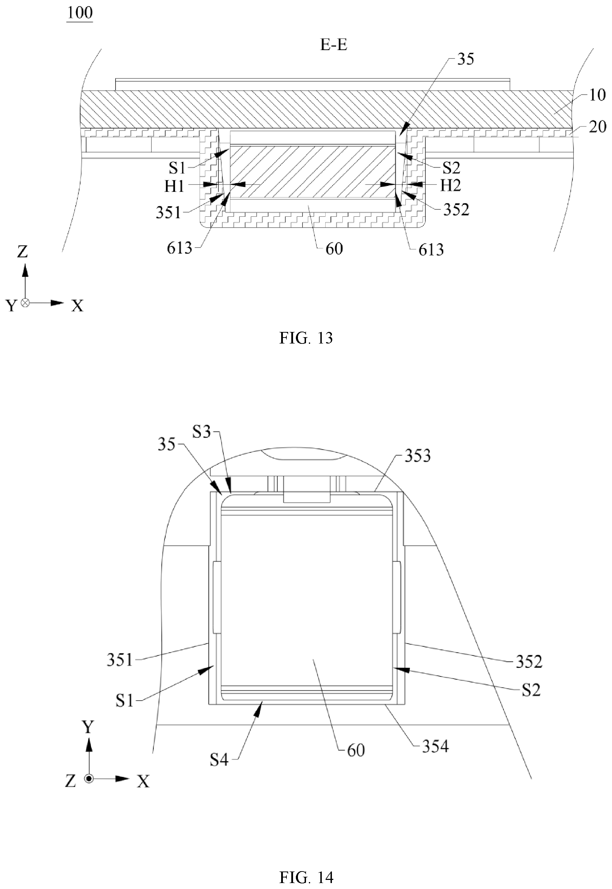

Referring to FIG. 13, FIG. 13 is a cross-sectional schematic view of a partial structure of the top cover assembly 100 taken along a section line E-E shown in FIG. 3.

A first gas channel S1 is formed between the support member 60 and the first side wall 351 of the mounting recess 35. The first gas channel S1 may be configured as a gap region between the support member 60 and the first side wall 351 of the mounting recess 35. The first gas channel S1 is in communication with at least one of the plurality of first vents 324.

It can be understood that the first gas channel S1 is formed between the support member 60 and the first side wall 351 of the mounting recess 35, and the first gas channel S1 is in communication with at least one of the plurality of first vents 324. It is possible to allow the first gas channel S1 to provide a path for gas entering the mounting recess 35 through the first vents 324, avoiding a problem in which the support member 60 blocks the first vent 324 of the central protrusion 32 to cause poor venting performance and an increase in air pressure, and accordingly result in the explosion of the battery cell. The gas inside the battery cell can be effectively discharged, improving venting reliability of the gas.

As illustrated in FIG. 13, a dimension H1 of the first gas channel S1 in the length direction of the lower plastic part 30 (the X direction shown in the drawings) gradually decreases from the opening of the mounting recess 35 towards the bottom wall of the mounting recess 35. That is, a spacing (H1 shown in the drawings) between the support member 60 and the first side wall 351 of the mounting recess 35 may gradually decrease from the opening of the mounting recess 35 towards the bottom wall of the mounting recess 35.

It can be understood that by designing the first side wall 351 of the mounting recess 35 as an inclined surface obliquely arranged with respect to the bottom wall of the mounting recess 35, and configuring the spacing between the support member 60 and the first side wall 351 of the mounting recess 35 (i.e., the dimension H1 of the first gas channel S1 in the length direction of the lower plastic part) to gradually decrease from the opening of the mounting recess 35 towards the bottom wall of the mounting recess 35, the spacing between the support member 60 and the first side wall 351 may be designed to be narrower at the bottom and wider at the top. This narrower configuration of the spacing at the bottom may reduce shaking of the support member 60 after being assembled into the lower plastic part 30. This wider configuration of the spacing at the top may ensure that there is also a channel for venting in a region where the support member 60 is located, improving venting reliability of the lower plastic part 30.

Further referring to FIG. 13, a second gas channel S2 is formed between the support member 60 and the second side wall 352 of the mounting recess 35. The second gas channel S2 may be configured as a gap region between the support member 60 and the second side wall 352 of the mounting recess 35. The second gas channel S2 is in communication with at least one of the plurality of second vents 325.

It can be understood that the second gas channel S2 is formed between the support member 60 and the second side wall 352 of the mounting recess 35, and the second gas channel S2 is in communication with at least one of the plurality of second vents 325. It is possible to allow the second gas channel S2 to provide a path for the gas entering the mounting recess 35 through the second vent 325, avoiding a problem in which the support member 60 blocks the second vent 325 of the central protrusion 32 to cause poor venting performance and an increase in air pressure, and accordingly result in the explosion of the battery cell. The gas inside the battery cell can be effectively discharged, improving the venting reliability of the gas.

As illustrated in FIG. 13, a dimension H2 of the second gas channel S2 in the length direction of the lower plastic part 30 (the X direction shown in the drawings) gradually decreases from the opening of the mounting recess 35 towards the bottom wall of the mounting recess 35. That is, a spacing (H2 shown in the drawings) between the support member 60 and the second side wall 352 of the mounting recess 35 may gradually decrease from the opening of the mounting recess 35 towards the bottom wall of the mounting recess 35.

It can be understood that by designing the second side wall 352 of the mounting recess 35 as an inclined surface obliquely arranged with respect to the bottom wall of the mounting recess 35, and configuring the spacing between the support member 60 and the second side wall 352 of the mounting recess 35 (i.e., the dimension H2 of the second gas channel S2 in the length direction of the lower plastic part) to gradually decrease from the opening of the mounting recess 35 towards the bottom wall of the mounting recess 35, the spacing between the support member 60 and the second side wall 352 may be designed to be narrower at the bottom and wider at the top. This narrower configuration of the spacing at the bottom may reduce the shaking of the support member 60 after being assembled into the lower plastic part 30. This wider configuration of the spacing at the top may ensure that there is also a channel for venting in the region where the support member 60 is located, improving the venting reliability of the lower plastic part 30.

Referring to FIG. 14, FIG. 14 is a schematic structural view of a partial structure of the top cover assembly 100 illustrated in FIG. 3.

In the embodiment of the present disclosure, a third gas channel S3 may be formed between the support member 60 and the third side wall 353 of the mounting recess 35. The third gas channel S3 may be in communication with each of the first gas channel S1 and the second gas channel S2; and/or, a fourth gas channel S4 may be formed between the support member 60 and the fourth side wall 354 of the mounting recess 35. The fourth gas channel S4 is in communication with each of the first gas channel S1 and the second gas channel S2. Of course, in some other embodiments, the support member 60 may also abut against the third side wall 353 and/or the fourth side wall 354 of the mounting recess 35, which is not strictly limited.

It can be understood that by forming the third gas channel S3 and/or the fourth gas channel S4 between the support member 60 and the side wall of the mounting recess 35, on the one hand, it is possible to further avoid the problem where the support member 60 blocks the first vent 324 and/or the second vent 325 of the central protrusion 32 to cause poor venting performance and the increase of air pressure, and accordingly result in the explosion of the battery cell. On the other hand, each additional gas channel reserved between the support member 60 and the side walls of the mounting recess 35 creates an additional channel for gas flow in the mounting recess 35, thereby effectively improving venting efficiency and venting reliability of the gas.

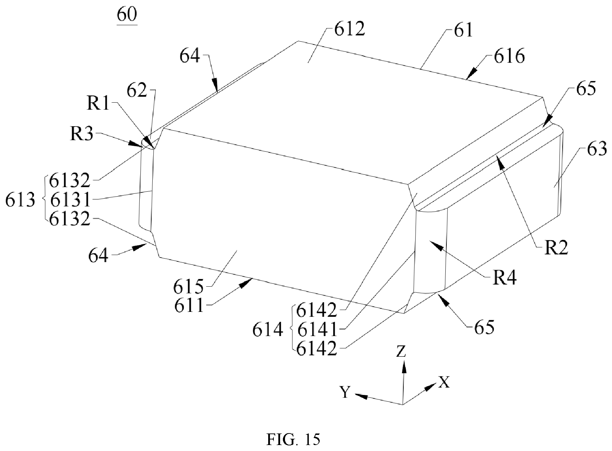

Referring to FIG. 13, FIG. 14, and FIG. 15, FIG. 15 is a schematic structural view of a support member 60 of the top cover assembly 100 illustrated in FIG. 3 from a perspective.

The support member 60 may include a main body 61, a first fixing portion 62, and a second fixing portion 63. The main body 61 may include a first support surface 611, a second support surface 612, a first connection surface 613, a second connection surface 614, a first transition surface 615, and a second transition surface 616. The first support surface 611 and the second support surface 612 may be arranged opposite to each other and spaced apart from each other in the thickness direction of the support member 60 (the Z direction shown in the drawings). The first support surface 611 may be in contact with the bottom wall of the mounting recess 35, and the second support surface 612 may be used to support the top cover 10. Each of the first connection surface 613 and the second connection surface 614 is connected between the first support surface 611 and the second support surface 612. The second connection surface 614 may be arranged opposite to the first connection surface 613 and spaced apart from the first connection surface 613 in the width direction of the lower plastic part 30 (the Y direction shown in the drawings). Each of the first transition surface 615 and the second transition surface 616 is connected between the first support surface 611 and the second support surface 612, as well as between the first connection surface 613 and the second connection surface 614. The first transition surface 615 and the second transition surface 616 may be arranged opposite to each other and spaced apart from each other in the length direction of the lower plastic part 30 (the X direction shown in the drawings).

The first connection surface 613 may include one first sub-surface 6131 and two second sub-surfaces 6132. The first sub-surface 6131 is connected between the two second sub-surfaces 6132. One of the two second sub-surfaces 6132, the first sub-surface 6131, and the other one of the two second sub-surfaces 6132 are arranged sequentially in the thickness direction of the lower plastic part 30 (the Z direction shown in the drawings). That is, the two second sub-surfaces 6132 are respectively connected to two opposite sides of the first sub-surface 6131 in the thickness direction of the lower plastic part 30. The first sub-surface 6131 may be arranged parallel to the thickness direction of the lower plastic part 30. Both of the two second sub-surfaces 6132 may extend obliquely relative to the thickness direction of the lower plastic part 30, and the extending directions of the two second sub-surfaces may intersect with each other.

The second connection surface 614 may include one third sub-surface 6141 and two fourth sub-surfaces 6142. The third sub-surface 6141 is connected between the two fourth sub-surfaces 6142. One of the two fourth sub-surfaces 6142, the third sub-surface 6141, and the other one of the two fourth sub-surfaces 6142 are arranged sequentially in the thickness direction of the lower plastic part 30 (the Z direction shown in the drawings). That is, the two fourth sub-surfaces 6142 are respectively connected to two opposite sides of the third sub-surface 6141 in the thickness direction of the lower plastic part 30. The third sub-surface 6141 may be arranged parallel to the thickness direction of the lower plastic part 30. Both of the two fourth sub-surfaces 6142 may extend obliquely relative to the thickness direction of the lower plastic part 30, and the extending directions of the two fourth sub-surfaces may intersect with each other.

The first fixing portion 62 is connected to the first sub-surface 6131, and two first avoidance grooves 64 are defined by the first fixing portion 62 and the two second sub-surfaces 6132 disposed at the same side as the first fixing portion 62. The second fixing portion 63 is connected to the third sub-surface 6141, and two second avoidance grooves 65 are defined by the second fixing portion 63 and the two fourth sub-surfaces 6142 disposed at the same side as the second fixing portion 63. Each of the two first avoidance grooves 64 is in communication with one or more gas channels selected from a group including the first gas channel S1, the second gas channel S2, the third gas channel S3, and the fourth gas channel S4. Each of the two second avoidance grooves 65 is in communication with one or more gas channels selected from a group including the first gas channel S1, the second gas channel S2, the third gas channel S3, and the fourth gas channel S4. One of the two first avoidance grooves 64 that is adjacent to the top cover 10 may be configured to receive at least part of the snap 341 of the partition 34. Further, as illustrated in FIG. 12, a surface of the snap 341 facing towards the main body 61 may be a guide inclined surface 342. The guide inclined surface 342 may be arranged obliquely relative to the thickness direction of the lower plastic part 30. The guide inclined surface 342 may improve mounting performance of the support member 60 and prevent the support member 60 from scratching the lower plastic part 30.

The aforementioned first gas channel S1 may be formed between the first transition surface 615 and the first side wall 351 of the mounting recess 35. The aforementioned second gas channel S2 may be formed between the second transition surface 616 and the second side wall 352 of the mounting recess 35. The aforementioned third gas channel S3 may be formed between an end surface of the first fixing portion 62 away from the main body 61 and the third side wall 353 of the mounting recess 35. The aforementioned fourth gas channel S4 may be formed between an end surface of the second fixing portion 63 away from the main body 61 and the fourth side wall 354 of the mounting recess 35.

It can be understood that four avoidance grooves are designed at four side surfaces of the support member 60, which not only plays a fool-proofing role during assembly, but also effectively prevents the support member 60 from interfering with the snap 341 of the partition 34. It is possible to allow a clear functional distinction between a supporting part and a fixing part of the support member 60, and it is beneficial to an improvement in assembly efficiency of the support member 60 and the lower plastic part 30. Moreover, on the basis that the support member 60 is fixed by the snap 341 of the partition 34, a support surface of the support member 60 can be made as large as possible, to better support the battery cell to prevent it from floating up after the lower plastic part 30 melts, ensuring that the gas inside the battery cell can still be discharged through the explosion-proof valve 81.

In addition, by allowing each avoidance groove to be in communication with one or more gas channels selected from a group including the first gas channel S1, the second gas channel S2, the third gas channel S3, and the fourth gas channel S4, a gas flow space in the mounting recess 35 can be increased, the venting rate can be accelerated, and the venting reliability can be improved.

In the embodiments of the present disclosure, any one of connections between the first fixing portion 62 and the first connection surface 613 is a curved surface transition R1. Any one of connections between the second fixing portion 63 and the second connection surface 614 is a curved surface transition R2. Any one of connections between the first fixing portion 62 and the first transition surface 615, and between the first fixing portion 62 and the second transition surface 616 is a curved surface transition R3. Any one of connections between the second fixing portion 63 and the first transition surface 615, and between the second fixing portion 63 and the second transition surface 616 is a curved surface transition R4. The curved surface transition refers to a designed feature that adopts an arc or other curved structures to achieve a smooth transition between intersecting parts or different regions of an object surface.

It can be understood that by designing any one of connections between each fixing portion and each connection surface, and between each fixing portion and each transition surface, as a curved surface transition, a problem of the support member 60 scratching the lower plastic part 30 during the use of the top cover assembly 100 can be effectively prevented, and a problem of chipping of support member 60 or generating string-shaped debris of the lower plastic part 30 can be avoided, achieving relatively high reliability.

The embodiments of the present disclosure are described in detail above. Specific embodiments are used in the present disclosure to illustrate the principles and implementations of the present disclosure. The description of the above embodiments is only intended to facilitate understanding of the method and its core concepts. Meanwhile, those skilled in the art can make modifications to specific implementations and change an application scope based on the concepts of the present disclosure. In summary, the contents of the specification shall not be construed as limitations to the present disclosure.

## Claims

1. A top cover assembly (100), comprising:
a top cover (10);
a lower plastic part (30), wherein:
the lower plastic part (30) comprises a lower plastic part body (31) and a central protrusion (32), wherein the lower plastic part body (31) and the top cover (10) are stacked with each other, wherein the lower plastic part body (31) has a first surface (311) and a second surface (312) opposite to each other in a thickness direction of the lower plastic part body (31), wherein the central protrusion (32) is connected to the lower plastic part body (31) and protrudes from the second surface (312), and wherein the central protrusion (32) has a bottom surface (321) and a first side surface (322), the bottom surface (321) and the second surface (312) being spaced apart from each other in a thickness direction of the lower plastic part (30), the first side surface (322) being connected between the second surface (312) and the bottom surface (321), and the first side surface (322) being one of two side surfaces of the central protrusion (32) spaced apart from each other in a length direction of the lower plastic part (30); and
the lower plastic part (30) has a mounting recess (35) and a plurality of first vents (324), wherein the mounting recess (35) is located at the lower plastic part body (31) and the central protrusion (32) and has an opening located at the first surface (311), and wherein the plurality of first vents (324) are arranged at intervals in a width direction of the lower plastic part (30), each of the plurality of first vents (324) being located at the first side surface (322) and the bottom surface (321) and extending through the central protrusion (32) in both the length direction and the thickness direction of the lower plastic part (30), and at least one of the plurality of first vents (324) being in communication with the mounting recess (35); and
a support member (60) located in the mounting recess (35), wherein in a thickness direction of the top cover assembly (100), a side of the support member (60) abuts against a bottom wall of the mounting recess (35), and another side of the support member (60) is used to support the top cover (10),
wherein the mounting recess (35) has a first side wall (351), the first side wall (351) being one of two side walls of the mounting recess (35) spaced apart from each other in the length direction of the lower plastic part (30), wherein a first gas channel (S1) is formed between the first side wall (351) and the support member (60), and is in communication with at least one of the plurality of first vents (324), and wherein a dimension of the first gas channel (S1) in the length direction of the lower plastic part (30) gradually decreases from the opening of the mounting recess (35) towards the bottom wall of the mounting recess (35).

2. The top cover assembly (100) according to claim 1, wherein the support member (60) comprises a main body (61) and a first fixing portion (62), wherein:
the main body (61) has a first connection surface (613), the first connection surface (613) being one of two surfaces of the main body (61) spaced apart from each other in the width direction of the lower plastic part (30), wherein the first connection surface (613) comprises one first sub-surface (6131) and two second sub-surfaces (6132), the first sub-surface (6131) being connected between the two second sub-surfaces (6132), and one of the two second sub-surfaces (6132), the first sub-surface (6131), and the other one of the two second sub-surfaces (6132) being arranged sequentially in the thickness direction of the lower plastic part (30); and
the first fixing portion (62) is connected to the first sub-surface (6131), two first avoidance grooves (64) being defined by the first fixing portion (62) and the two second sub-surfaces (6132) that are located at the same side as the first fixing portion (62), and each of the two first avoidance grooves (64) being in communication with the first gas channel (S1).

3. The top cover assembly (100) according to claim 2, wherein:
the support member (60) further comprises a second fixing portion (63); and
the main body (61) further has a second connection surface (614) opposite to the first connection surface (613) in the width direction of the lower plastic part (30), wherein the second connection surface (614) comprises one third sub-surface (6141) and two fourth sub-surfaces (6142), the third sub-surface (6141) being connected between the two fourth sub-surfaces (6142), and one of the two fourth sub-surfaces (6142), the third sub-surface (6141), and the other one of the two fourth sub-surfaces (6142) being arranged sequentially in the thickness direction of the lower plastic part (30),
wherein the second fixing portion (63) is connected to the third sub-surface (6141), two second avoidance grooves (65) being defined by the second fixing portion (63) and the two fourth sub-surfaces (6142) that are located at the same side as the second fixing portion (63), and each of the two second avoidance grooves (65) being in communication with the first gas channel (S1).

4. The top cover assembly (100) according to claim 3, wherein the main body (61) further has a first transition surface (615) and a second transition surface (616), each of the first transition surface (615) and the second transition surface (616) being connected between the first connection surface (613) and the second connection surface (614), and the first transition surface (615) and the second transition surface (616) being opposite to each other in the length direction of the lower plastic part (30), wherein:
any one of connections between the first fixing portion (62) and the first transition surface (615), and between the first fixing portion (62) and the second transition surface (616) is a curved surface transition; and/or
any one of connections between the second fixing portion (63) and the first transition surface (615), and between the second fixing portion (63) and the second transition surface (616) is a curved surface transition.

5. The top cover assembly (100) according to claim 4, wherein:
the central protrusion (32) further has a second side surface (323) connected between the second surface (312) and the bottom surface (321), the second side surface (323) being spaced apart from the first side surface (322) in the length direction of the lower plastic part (30);
the lower plastic part (30) has a plurality of second vents (325) arranged at intervals in the width direction of the lower plastic part (30), each of the plurality of second vents (325) being located at the second side surface (323) and the bottom surface (321), and extending through the central protrusion (32) in both the length direction and the thickness direction of the lower plastic part (30), and at least one of the plurality of second vents (325) being in communication with the mounting recess (35); and
the mounting recess (35) further has a second side wall (352) opposite to the first side wall (351) in the length direction of the lower plastic part (30), wherein a second gas channel (S2) is formed between the second side wall (352) and the support member (60) and is in communication with at least one of the plurality of second vents (325), wherein a dimension of the second gas channel (S2) in the length direction of the lower plastic part (30) gradually decreases from the opening of the mounting recess (35) towards the bottom wall of the mounting recess (35), and wherein the second gas channel (S2) is in communication with each of the two first avoidance grooves (64) and/or each of the two second avoidance grooves (65).

6. The top cover assembly (100) according to claim 5, wherein the mounting recess (35) further has a third side wall (353) and a fourth side wall (354), each of the third side wall (353) and the fourth side wall (354) being connected between the first side wall (351) and the second side wall (352), and the third side wall (353) and the fourth side wall (354) being opposite to each other in the width direction of the lower plastic part (30), wherein:
a third gas channel (S3) is formed between the third side wall (353) and the support member (60), the third gas channel (S3) being in communication with each of the first gas channel (S1) and the second gas channel (S2); and/or
a fourth gas channel (S4) is formed between the fourth side wall (354) and the support member (60), the fourth gas channel (S4) being in communication with each of the first gas channel (S1) and the second gas channel (S2).

7. The top cover assembly (100) according to any one of claims 2 to 6, wherein:
the lower plastic part (30) has a cavity (33) located at the lower plastic part body (31) and the central protrusion (32), an opening of the cavity (33) being located at the first surface (311); and
the lower plastic part (30) further comprises a partition (34) connected to a bottom wall of the cavity (33) and to two opposite side walls of the cavity (33) in the length direction of the lower plastic part (30), the partition (34) being engaged with an inner wall of the cavity (33) to divide the cavity (33) to form the mounting recess (35) in the cavity (33),
wherein an end of the partition (34) away from the bottom wall of the cavity (33) is provided with a snap (341) at least partially located in one of the two first avoidance grooves (64) that is adjacent to the top cover (10), the snap (341) being configured to fix the support member (60).

8. The top cover assembly (100) according to any one of claims 1 to 6, wherein the top cover (10) has an explosion-proof hole (11), the explosion-proof hole (11) extending through the top cover (10) in the thickness direction of the top cover (10) and configured to be connected to an explosion-proof valve (81), wherein:
in the thickness direction of the top cover assembly (100), a projection of the support member (60) on the top cover (10) partially covers the explosion-proof hole (11); or
in the thickness direction of the top cover assembly (100), a projection of the support member (60) on the top cover (10) is spaced apart from the explosion-proof hole (11).

9. The top cover assembly (100) according to any one of claims 1 to 6, wherein the lower plastic part (30) further has a plurality of third vents (326) arranged at intervals in the width direction of the lower plastic part (30), each of the plurality of third vents (326) extending through the central protrusion (32) in the thickness direction of the lower plastic part (30), and at least one of the plurality of third vents (326) being in communication with the mounting recess (35).

10. The top cover assembly (100) according to any one of claims 1 to 6, wherein the lower plastic part (30) further comprises a first edge protrusion (38) connected to the lower plastic part body (31) and protruding from the second surface (312), wherein:
the first edge protrusion (38) is located at an end of the lower plastic part body (31) in a length direction of the lower plastic part body (31); and
the first edge protrusion (38) has a plurality of fourth vents (381) arranged at intervals in the width direction of the lower plastic part (30) and facing towards the plurality of first vents (324) in the length direction of the lower plastic part (30), each of the plurality of fourth vents (381) extending through the first edge protrusion (38) in the length direction of the lower plastic part (30).

11. The top cover assembly (100) according to claim 5, wherein the lower plastic part (30) further comprises a second edge protrusion (39) connected to the lower plastic part body (31) and protruding from the second surface (312), wherein:
the second edge protrusion (39) is located at the other end of the lower plastic part body (31) in the length direction of the lower plastic part body (31); and
the second edge protrusion (39) has a plurality of fifth vents (391) arranged at intervals in the width direction of the lower plastic part (30) and facing towards the plurality of second vents (325) in the length direction of the lower plastic part (30), each of the plurality of fifth vents (391) extending through the second edge protrusion (39) in the length direction of the lower plastic part (30).

12. The top cover assembly (100) according to claim 8, wherein:
the lower plastic part (30) has a first hole group (36), wherein in the length direction of the lower plastic part (30), the first hole group (36) is located on a side of the central protrusion (32) and disposed adjacent to the central protrusion (32), wherein the first hole group (36) comprises a sixth vent (361) and a plurality of seventh vents (362), each of the sixth vent (361) and the plurality of seventh vents (362) extending through the lower plastic part (30) in the thickness direction of the lower plastic part (30), wherein in a direction outward from a center line of the sixth vent (361) in the width direction of the lower plastic part (30), the plurality of seventh vents (362) are arranged in a form of at least two first annular rings (T1) that are sequentially sleeved around the sixth vent (361) at intervals, and wherein seventh vents of the plurality of seventh vents (362) located on one of the at least two first annular rings (T1) are arranged at intervals; and
in the thickness direction of the top cover assembly (100), a projection of the explosion-proof hole (11) on the lower plastic part body (31) at least partially covers a part of a projection of the central protrusion (32) on the lower plastic part body (31) and a part of a projection of the plurality of seventh vents (362) on the lower plastic part body (31).

13. The top cover assembly (100) according to claim 12, wherein:
a dimension of each of the at least two first annular rings (T1) in the width direction of the lower plastic part (30) is greater than a dimension of each of the at least two first annular rings (T1) in the length direction of the lower plastic part (30), and
the dimension of each of the at least two first annular rings (T1) in the length direction of the lower plastic part (30) gradually increases and then gradually decreases from one side of the lower plastic part (30) in the width direction of the lower plastic part (30) towards the other side of the lower plastic part (30) in the width direction of the lower plastic part (30),
optionally, the lower plastic part (30) further comprises a protuberance (301) connected to each of the lower plastic part body (31) and the central protrusion (32) and protruding from the second surface (312), wherein each of the sixth vent (361) and the plurality of seventh vents (362) is formed at the protuberance (301) and extends through the protuberance (301) in the thickness direction of the lower plastic part (30); and
the lower plastic part (30) further has a gas release recess (302) having an opening located at the first surface (311), the gas release recess (302) being recessed from the first surface (311) towards the protuberance (301) and the central protrusion (32), and the gas release recess (302) being in communication with each of the mounting recess (35), the sixth vent (361), and the plurality of seventh vents (362), wherein in the thickness direction of the top cover assembly (100), a projection of the gas release recess (302) on the top cover (10) covers the explosion-proof hole (11).

14. A battery (200), comprising:
an electrode assembly (220);
a housing (210); and
the top cover assembly (100) according to any one of claims 1 to 13, the top cover assembly (100) being connected to the housing (210), a receiving space being defined by the top cover assembly (100) and the housing (210), and the electrode assembly (220) being located in the receiving space.

15. A power consumption device (300), comprising the battery (200) according to claim 14.
